# EUROPEAN PATENT SPECIFICATION

(11) **EP 4 321 953 B1**
(45) Date of publication and mention of the grant of the patent: **20.05.2026**
(21) Application number: 22190188.7
(22) Date of filing: 12.08.2022
(51) Int. Cl.: G05D 1/224, B61L 27/04, B61L 23/04, B61L 27/20, B61L 27/60

(54) **REMOTE DRIVING CONTROL OF VEHICLES ON GENERIC WORKPLACES**
ENTFERNTE FAHRSTEUERUNG VON FAHRZEUGEN AN GENERISCHEN ARBEITSPLÄTZEN
COMMANDE D'ENTRAÎNEMENT À DISTANCE DE VÉHICULES SUR DES POSTES DE TRAVAIL GÉNÉRIQUES

(43) Date of publication of application: 14.02.2024
(73) Proprietor: Deutsche Telekom AG, 53113 Bonn (DE)
(72) Inventor: ANGIERSKI, André, Berlin (DE); AGARWAL, Pragya, Aachen (DE)
(74) Representative: karo IP

(56) References cited:
- US-A1- 2009 248 223
- US-A1- 2019 302 761
- US-A1- 2020 324 798
- US-A1- 2022 194 440

## Description

The invention relates to a method, a remote driving control system and a computer program to enable a remote driving control of railway vehicles, ship vehicles, drones, and/or farm vehicles on a generic workplace.

In the state of the art it is already possible to perform remote operations of railway vehicles. A remote controlled train is a railway locomotive that can be operated with a remote control. It differs from a conventional locomotive in that a remote control system has been installed in the locomotive, which uses a radio transceiver system to communicate with remote operators. The locomotive is operated by a person not physically present at the driving controls within the confines of the locomotive cab. They have been in use for many years in the railroad industry, including industrial applications such as bulk material load-out, manufacturing, process and industrial switching.

To facilitate such a remote control of the train, the remote control system comprises at least a remote control onboard unit that provides an interface to the train. The remote control can be part of an automatic train operation onboard unit or standalone unit. The automatic train operation onboard unit comprises a self-driving functionality. However, there are traffic situation in which those self-driving capacities are not sufficient and the remote control is being used to facilitate the driving of the vehicle by a remote-driver.

The automatic train operation onboard unit and/or the remote control onboard unit captures video data or receives video data by camera means of the train, wherein this video data basically shows the same field of view that the train's driver would normally see from inside the locomotive cab. This video data can be assessed by single or multiple cameras, sensor images (radar, lidar, ...) and can be preprocessed, e.g. for obstacle detection or highlighting.

The automatic train operation and/or the remote control onboard unit also captures or receives diagnostic and/or status train information and from other onboard systems.

The automatic train operation and/or the remote control onboard unit comprises a communication interface, in particular a radio transceiver, that is configured to send the video data and the diagnostic and/or status train information to a remote operator desk and to receive operational commands from the remote operator desk. The remote operator desk, which is also part of the remote control system, comprises an interface to receive the data sent by the automatic train operation and/or the remote control onboard unit and to send operational commands to the automatic train operation and/or to the remote control onboard unit, respectively the train.

The remote operator desk is configured to present the video data and/or the diagnostic and/or the status information of the train on a display so that a remote driver can steer the train as if he would be in the train's cab. Hence, the basic design for remote operator desk in railways uses a 1-to-1 relation between the vehicle and the remote operator desk. In other word, the remote operator desk mimics the actual control device in a 1-to-1 relation. The remote operator desk includes every control knob, lever, indicator, etc. As a result, the workplace needs to be designed for one specific vehicle (type) and cannot be reused for remote operations of other railway vehicles.

US 2019/302761 A1 discloses a method and a system to enable a remote driving control of vehicles.

In the view of above, it is an object of the present invention to provide techniques to enable a highly flexible solution for remote control of railway vehicles (such as trains), ships, drones, and/or farm vehicles (such as tractors).

The railway vehicles, ships, drones, and/or farm vehicles have the characteristic feature in common that they can be operated in "low traffic" situations in which the remote operation of such vehicles is not as time critical as it is with cars. For example, the trains travel on railways, wherein the railways guide the trains along their way and they typically do not interact frequently with other trains, so that they are especially suited for remote control operation. If ships travel over the ocean, there is also only minor traffic so that they can also be steered by remote control operation. However, this can change if the ship enters a harbor region. Nevertheless, it is possible that a real person enters the ship and takes over the control if the ship enters such a harbor region. Typically, farm vehicles are alone on the field and can greatly be controlled by remote operation.

This object is solved by the features of the independent claims.

The features of the various aspects of the invention described below or the various examples of implementation may be combined with each other, unless this is explicitly excluded or is technically impossible.

According to a first aspect of the invention, a method is provided to enable a remote driving control of railway vehicles, ship vehicles, drones, and/or farm vehicles on a generic workplace, the method comprises the following steps:
- Providing a driving-control-converting-algorithm, wherein the driving-control-converting-algorithm transforms control elements and/or status elements of a specific vehicle into a vehicle-specific-2D-model or a virtual-reality-model;
   - control elements of the vehicle can be engine control, traction units, braking units, steering units, signaling elements and/or other units that "have an effect" on the behavior of the vehicle. The status elements are basically those parts of the vehicle that the driver of the vehicle observes while driving the vehicle. In that sense the status elements describe the condition or functionality of the vehicle, like air pressure, temperature, condition of brakes, and/or speed indicator etc. Another embodiment of a status element, is a representation of the view side of the direction of travel a driver can see if you would be inside the cab. In the context of this invention transforming those elements means that the physical functionality, for example the brake force of multiple braking units, is being converted to the models described above. For example, the brake force can be represented by a bar re-presentation that is being filled with color depending on the status of the brake force. For example, if this 2D re-presentation is not filled at all, this corresponds to the case that the vehicle is not exerting any brake force at all, wherein a 2D bar re-presentation totally filled with color corresponds to the case that the vehicle is exerting maximum brake force; another way to describe this transformation is to say that the physical functionalities are translated to a graphical representation, whereas the remote driver can interact with the graphical representation to remotely drive the vehicle;
   - when performing the appropriate abstraction or transformation, it is nevertheless important to have in mind that those vehicles are generally very different from each other, i.e. that they comprise different control elements and/or status elements and behave differently when being driven by a remote operator; therefore, the driving-control-converting-algorithm is being configured to take the properties of the individual vehicles into account. The vehicle-specific-2D-model or the virtual-reality-model can be generated by the driving-control-converting-algorithm and stored within a database in order to decrease the computational overhead. In this sense, the vehicle-specific-2D-model or the virtual-reality-model can be described as off-line models;
- Providing the vehicle-specific-model with data received from an automatic train operation onboard unit and/or a remote control onboard unit of that vehicle as input data, wherein the vehicle-specific-model is configured to recognize the data and pass it to the appropriate transformed control elements and/or status elements which results in a real-time-vehicle-specific-model;
   - the data received indicates the status, the values of the control elements and/or status elements and feeds the current information of the vehicle into the vehicle-specific-2D-model or the virtual-reality-model. For example, the data received can be i) video data, in particular in an embodiment of a video stream, that shows the surroundings, in particular in the traveling direction of the vehicle, ii) the actual values of the vehicle like air pressure, the temperature, the condition of brakes, and/or the speed indicator etc. **In** this sense, one could say that the off-line model is being filled with "life". **It** provides a representation of the real vehicle with an accuracy that suffices to operate the train remotely.
   - to put the data received into the correct control and/or status elements, the algorithm of the vehicle-specific-model can determine the kind of data, for example based on a defined protocol. For example, the video data shows a different data type than the speed information so that the data can be written into the corresponding control and/or status element.
   - it follows that the automatic train operation onboard unit and/or the remote control onboard unit is configured to receive and transmit the corresponding data set. **It** is beneficial if the automatic train operation onboard unit and/or the remote control onboard unit comprises a mobile communication interface that is configured to provide 3G, 4G, 5G or further standards. In particular, in the case of ships, the communication interface can be configured to provide satellite-based mobile communication;
   - in that sense the status elements can be video data, in particular in an embodiment of a video stream, that shows the surroundings, in particular in the traveling direction, of the vehicle or information about the functionality (oil pressure, etc.) of the units of the vehicle;
- Displaying the real-time-vehicle-specific-model on a remote operator workspace, wherein a remote operator drives the vehicle by interacting with the real-time-vehicle-specific-model by operating means of the workspace.
   - by interacting with the real-time-vehicle-specific-model, the real-time-vehicle-specific-model is being configured to generate driving commands based on this interaction by the remote operator. For example, possible interactions are to increase the traction forces of the vehicle for acceleration, to make braking maneuvers for deceleration, and/or to change the direction of the vehicle etc. The remote operator workspace is also configured to send those commands over a communication network back to the vehicle. For that purpose, it can use the same communication standards as the automatic train operation onboard unit and/or the remote control onboard unit. The commands are received by the automatic train operation onboard unit and/or the remote control onboard unit, wherein the automatic train operation onboard unit and/or the remote control onboard unit controls the vehicle according to those commands.

The invention provides the advantage that it decouples vehicle characteristics as much as possible from the characteristics of a remote operator workspace and breaks the common 1-1 representation of the workspace. Hence, a kind of generic workspace is being enabled that allows to remotely operate a wide range of different vehicles. The representation on this flexible workspace can be designed to be more uniform so that is easier for remote operators to adapt to another vehicle type. Another advantage is that a common computer can be used to remotely operate the vehicle so that is even possible to provide this remote driving as a cloud service.

In an embodiment, the driving-control-converting-algorithm has access to and uses a database that stores default configuration data and/or real-time configuration data of the specific vehicle.

This provides the advantage that the driving-control-converting-algorithm can generate a model that takes the differences of the different vehicles into account. The default configuration data can be construction plan data that shows which "value" a control elements and/or status element of a certain vehicle actually should have and how these elements are being configured according to the plan. However, according to real life, an actual vehicle generally differs from the vehicle as planned so that the real-time-vehicle-specific-model becomes even more accurate if real-time configuration data is taken into account. Hence, real-time configuration data can comprise calibration data (of braking units, traction units, etc.). The real-time configuration data can be data captured from the vehicle and/or its onboard unit(s) itself, but it can also be data captured from the track or from further vehicles that indicates emergency situations and are the statues of the track, e.g. directly through onboard diagnostics (e.g. failures from onboard units) or indirect through data analytics on trackside/cloud. For example, it can be measured that a railroad is due to certain weather conditions more slippery than expected. By means of the real-time configuration data, the real-time-vehicle-specific-model can be adjusted accordingly to consider a longer braking distance, for example.

In an embodiment, the real-time configuration data comprises sensor data of the vehicle, of another vehicle, of track sensors and/or of timetables.

As already described above, the real-time configuration data can be used to adapt the real-time-vehicle-specific-model to the current situation of the vehicle. In that sense, the real-time configuration data can change in the database that is used by the driving-control-converting-algorithm. Another example is that weight sensors of the vehicle can determine the mass of the vehicle that has an impact on acceleration, on braking and/or on steerability of the vehicle. It is also possible to use timetables to predict the mass of the vehicle. For example, according to the timetable it can be expected that there is a higher mass during rush hours.

In an embodiment, at least two real-time-vehicle-specific-models are displayed on a screen or on a virtual glasses of the workspace. In particular, this can be used for supervision tasks.

This provides the advantage that the remote operator supervises more than one vehicle at once and take over the driving for one of this vehicles at different times. It is also possible that the remote operator drives vehicles of a different kind by using the same workplace. The highly simplified presentation of the vehicles makes it even possible that the remote operator might be able to drive trains as well as ships. In particular, this is possible if the vehicles travel through low traffic areas in which it is not necessary to perform very frequent driving commands. This can be the case if a ship travels over the ocean or if the train travels in a sparsely populated landscape. When the ship or the train approaches a last mile region it might be beneficial if the other vehicles of the remote workspace are stopped or if the control for the last mile region is handed over to another remote operator who then only drives for the specific vehicle and can fully concentrate on a high-traffic situation of the last mile.

In an embodiment, the real-time-vehicle-specific-model that corresponds to the vehicle the operator is currently driving is displayed in a highlighted mode.

The highlighted mode provides the advantage that the operator is actually aware, which vehicle he is currently driving so that the risk that he mixes up the different vehicles is being reduced.

In an embodiment, the highlighted mode shows the current real-time-vehicle-specific-model in bigger size and/or with a higher data rate than the other non-current real-time-vehicle-specific-models.

The current real-time-vehicle-specific-model can be displayed in a big size view in the middle of the screen, whereas the real-time-vehicle-specific-models of the other vehicles can be arranged on the side of the screen in smaller size. If this current real-time-vehicle-specific-model is being provided with a higher data rate, in particular with a higher data rate of the video stream that shows the driving view of the vehicle, it is possible to efficiently reduce the overall data volume of the method. It is even possible that the operator defines the data rate and/or the resolution of each of the real-time-vehicle-specific-models dynamically. Especially, in low traffic areas, a data rate of one image per second, in particular one image per 5 seconds, can be sufficient to remotely operate the vehicle, wherein the data rate can depend on the vehicle. The value of the requested data rate of each real-time-vehicle-specific-model is sent to the vehicle so that it can adapt its sending characteristics accordingly.

In an embodiment, a pop-up window with vehicle specific information appears when the operator switches between different real-time-vehicle-specific-models and/or that pop-up window with emergency information appears if an emergency is detected by the vehicle, by track sensors, or other source of information. The information can also comprise a tutorial or interactive quick start guide. Control can only be taken over afterwards acknowledgement of this information.

This provides the advantage that the remote operator is aware of important differences of the vehicles and/or he is being informed of emergency situations of a certain vehicle while he is currently driving another vehicle. An emergency situation can be assessed if the vehicle operates outside defined parameters or if a possible obstacle is being detected in the video stream.

In an embodiment, an illustration of the vehicle is displayed in a virtual environment and/or within captured video data of the vehicle, wherein this illustration also shows steering angle and braking predictions as lines, wherein the predictions are based on the usage of the operating means by the operator and the real-time-vehicle-specific-model.

This provides the advantage that the operator actually sees how the vehicle behaves due to his steering in a kind of representation that mimics the reality. The illustration can be a kind of icon that shows the vehicle and can be configured to mimic the view as if the operator would sit in the cabin. The steering angel and braking prediction lines help the operator to see how the vehicle would behave based on the current driving commands. This is especially beneficial for the invention because the operator is being able to drive a great variety of different vehicles that all behave differently. For example, a fully loaded cargo train will have longer braking distance than an empty passenger train. The prediction lines show where the respective vehicle is expected to stop so that the operator can increase the braking force if there is a need to stop earlier.

In an embodiment, the operating means comprise a computer mouse, a touch-screen, a keyboard, and/or a joystick.

This provides the advantage that the operator can interact with the real-time-vehicle-specific-model displayed on a generic workspace. By using a combination of those operating means, it is possible to generate complex commands that should be able to account for almost all if not for any driving situation. In particular, known joysticks of manufacturers of gaming consoles are configured to enable driving of the ships, trains, drones and/or farm vehicles as different simulator games of the vehicles already exist.

In an embodiment, a graphical illustration of the specific upcoming route information is provided to support the remote operator with his driving task.

In an embodiment, the joystick comprises force feedback elements, wherein the force feedback is adjusted according to the vehicle that is currently under operation. The joystick it can be loaded with configuration data that corresponds to the vehicle that is currently under operation.

This provides the advantage that the operator actually gets the feeling that one vehicle is different than another vehicle. For example, if the train is heavier than the braking and/or the acceleration resistance can be increased. Hence, the operator gets the feeling that he has to brake harder in order to stop the heavier vehicle.

In an embodiment, the driver receives feedback on specific information from the vehicle under control through vibration machines and LED, loudspeakers installed on chairs and workplaces for the remote operator.

In an embodiment, devices like vibration machines , LED and loudspeakers can be provided also as smart devices or wearables.

In an embodiment, the driver attention can be increased for certain situations by using a vibration machine or LEDs. For example, if a train slips and/or slides or on a different vehicle turbulences occur, the vibration machine can feed this information directly to the remote operator.

In an embodiment, the driver's attention can be supervised by means of
- classical buttons operated by hands or feet in a cyclic manner;
- computer vision system and image/video analysis that analyses the remote operator's activity, e.g. eyes, hands, head or distraction through smartphones, colleagues, and others.
- biological sensors, e.g. heart rate monitoring.

In case the driver vigilance device detects the remote operator's attention is not given or not sufficient an alarm can be given to the remote operator and thereafter the vehicle operation can transition either into a safe state, e.g. land vehicles brake automatically, or remote control can be handed over to a different remote operator.

In an embodiment, the attention of the remote operator is supervised during operations through a driver vigilance device.

In an embodiment, the driver vigilance device is realized by means of finger or hand or foot activated buttons and/or eye and/or head tracking and/or by tracking of hand activities and/or by means of distraction and/or by means of biological sensor information.

In an embodiment, the remote operator workspace is a virtual glasses, desktop PC, smartphone, and/or a tablet.

This provides the advantage that the invention can be used in a very flexible way on many generic systems, even on mobile communication means. It is even possible that the display of the real-time-vehicle-specific-model can be adapted to the actual remote operator backspace in use. For example, due to the smaller display of the smart phone it might be only allowed to remotely drive one vehicle at once or the allowance can be restricted to supervision and emergency stop.

In an embodiment, an appearance of the real-time-vehicle-specific-model can be adjusted by the operator, and/or takes the characteristics of the workspace into account.

This provides the advantage that the operator can adjust the representation to his individual needs as to increase his performance.

In an embodiment, the driving-control converting algorithm, the database and/or the real-time-vehicle-specific-model are implemented on a cloud server or central data center.

This provides the advantage that the remote driving operation can be provided as a cloud service or alike. If the driving-control converting algorithm is implemented on a central server, it can be updated more easily and computational power can be easier scaled up. The same is true for the database. If the real-time-vehicle-specific-model is run on the central server within the cloud, the remote control of the different vehicles can be distributed amongst multiple remote operators in a very flexible way. For example, an operator can pass the remote driving of a vehicle easily to another operator, wherein the cloud server simply establishes the communication with that vehicle with another operator. Furthermore, the remote driving is not restricted to defined locations but is even possible in home office environments dependent on the availability of certain interfaces, e.g. joysticks.

According to a second aspect, the invention provides a remote driving control system to enable a remote driving control of railway vehicles, ship vehicles, drones, and/or farm vehicles on a generic workplace, comprising
- a server having
   • a communication interface to a vehicle, wherein the communication interface is being configured to receive data captured by the vehicle, in particular by an automatic train operation onboard unit and/or a remote control onboard unit, and to send driving commands of an operator to the vehicle;
   o a computing unit configured
      - to use a driving-control-converting-algorithm that is implemented on the computing unit to abstract control elements of a specific vehicle into a vehicle-specific-2D-model or a virtual-reality-model;
      - to provide the vehicle-specific-model with data received from the automatic train operation onboard unit and/or the remote control onboard unit of that vehicle as input data, wherein the vehicle-specific-model is configured to recognize the data and pass it to the appropriate abstracted control elements and/or status elements and to generate in a real-time-vehicle-specific-model;
- means for displaying the real-time-vehicle-specific-model to the remote operator;
- operating means configured to enable an interaction of the remote operator with the real-time-vehicle-specific-model, wherein the real-time-vehicle-specific-model or another dedicated algorithm generates driving commands due to this interaction.

The remote driving control system basically provides the same advantages as described in context with the method above. In particular, it is possible that the server is located as a central cloud server within a cloud environment or as a central data center. The remote driving control system can also comprise the remote workspace and/or the vehicle that is remotely operated itself. Furthermore, the remote driving control system can comprise the communication network that enables the data connection between the server, the vehicle, the operating means and/or the remote workspace.

According to a third aspect of the invention, a computer program is being disclosed comprising instructions which, when the program is executed by a computing unit, in particular a server, cause the computing unit to carry out the steps of
- Generating a transformed vehicle-specific-2D-model or a virtual-reality-model of a vehicle according to the method described above.

This enables the advantage that is possible to generate the transformed or abstracted vehicle-specific-2D-model or a virtual-reality-model that can be used to operate the vehicle on generic workspace.

It is also possible that the computer program comprises instructions to generate a real-time-vehicle-specific-model as described above based on data received from the automatic train operation onboard unit and/or the remote control onboard unit as input data.

It is also possible that the computer program comprises instructions to generate driving commands due to the interaction of a remote operator with the real-time-vehicle-specific-model.

In the following, preferred implementation examples of the present invention are explained with reference to the accompanying figure:

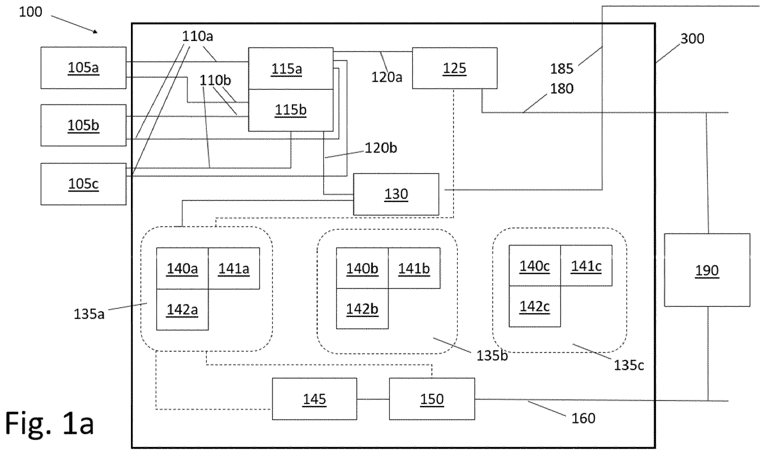

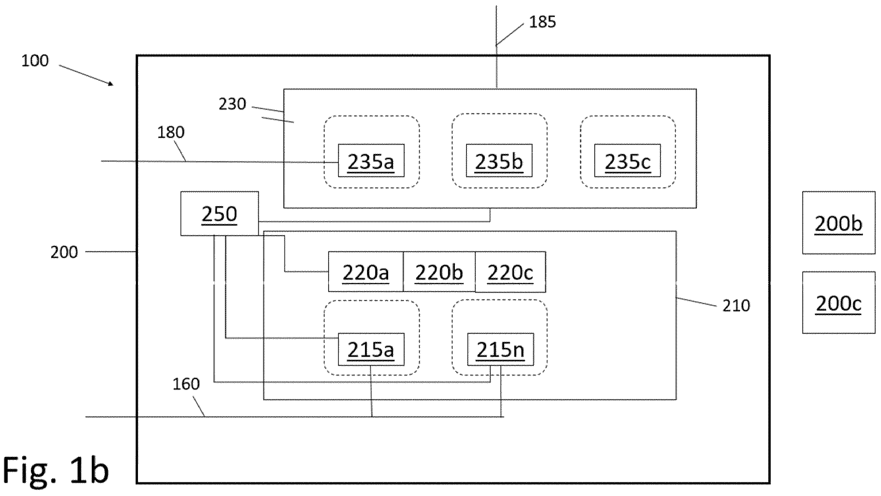

- Fig. 1a, b:: shows a remote driving control system according to the invention, wherein Fig. 1b is a continuation of Fig. 1a because it was not practical to show the overall remote driving control system on one page.

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

Fig. 1a, b shows a remote driving control system 100 according to the invention, wherein Fig. 1b is a continuation of Fig. 1a because it was not practical to show the overall remote driving control system on one page. Figures 1a, b show in an exemplary embodiment three different onboard units 105 a-c of three different trains. In the following, the term onboard unit will be used as an abbreviation for an automatic train operation onboard unit and/or a remote control onboard unit that is described above.

The train with the onboard unit 105a is considered to be the train that is currently remotely driven by an operator. The onboard unit 105a transmits video data via a communication link 110a to a video data interface 115a of the cloud environment 300. All the onboard units 105a-c transmit diagnostic data via a communication link 110b to a diagnostic data interface 115b of the cloud environment 300. The communication links 110a, b can be designed as multiple parallel links for the purpose of load balancing. Because only the train that corresponds to the onboard unit 105a is the one that is currently driven, it is necessary that this onboard unit 105a transmits video data. However, it is also possible that all onboard units 105a-c transmit video data to the video data interface 115a in parallel. The communication links 110a, b are mobile communication links. Internal communication links 120 a, b are provided within the cloud environment 300 to facilitate a data exchange between a streaming service 125 and the video data interface 115a and between the diagnostic data interface 115b and a diagnostic dashboard 130.

The cloud environment 300 also comprises three configuration modules 135a-c, wherein only the configuration module 135a will be described in the following as it corresponds to the onboard unit 105a. It can be extended to an arbitrary number of configuration modules.

The configuration modules 135 that can be run on a computing unit comprise a driving-control-converting-algorithm that takes configurations of the train equipped with the onboard unit 105a into account to generate a vehicle-specific-2D-model or a virtual-reality-model based on characteristic configurations of the train 140a, wherein the models show control elements and/or status elements of the train abstracted way. The creation of the vehicle-specific-2D-model or a virtual-reality-model can also take characteristics of a certain workspace 141a and a desired driver set up 142a into account.

The model can be handed over to a control adaption module 145 and interact with a control dashboard module 150, wherein both of these modules configure the model in a way that the operator can interact with it. The control adaption module 145 and the control dashboard module 150 can generate the driving commands due to the remote driving interactions of the operator. For that purpose, a second communication link 160 is being provided between the control dashboard 150 a first touchscreen 215a and a n-th touchscreen 215n of a control module 210 of a remote operator workplace. Instead of the touchscreens 215 or additional to the touchscreens 215 other operating means like a computer mouse, joystick and/or keyboard can be used to generate the driving commands. It is possible that the generated driving commands are sent back over the second communication link 160 and then forwarded by the cloud environment 300 to the onboard unit 105 or that the remote operator workplace 200 directly sends the driving commands to the onboard unit 105 via a mobile communication network. The following distinction is possible: Option a) Data goes directly to the display, then the displays need own software (usually touch displays in trains with own processor and operating systems like Linux or similar); Option b) Data goes to desktop PC 250, which generates the visualization for the display according to the configurations of the model, the displays themselves are then just "dumb" display and input elements (in case of touch screens).

The model can be filled with video data and diagnostic data, so that a real-time-vehicle-specific-model results 190. The driving commands can also be generated by considering the real-time-vehicle-specific-model results. The real-time-vehicle-specific-model 190 can be displayed to the operator on the remote operator workspace 200 in two different parts to increase the clarity of the presentation. A desktop PC 250 with one or more screens of the remote operator workspace 200 can be used for this task. One part is the already described control module 210, wherein the other part is a supervision module 230. Those supervision module 230 receives the video stream 180 and diagnostic data 185 over communication links and displays them on monitors 235a-c and/or touchscreens 235a-c.

The supervision module 230 can optionally pick up concepts of the EUDDplus (European Driver's Desk plus) with extensions. This includes 4 displays with display and input possibilities with the following scope: Train Radio Display; Electronic Time-table Display; Control Command Display; Technical and Diagnostic Display; EVU-Specific Display (optional).

According to the driving circumstances, the operator observes the monitors 235a-c and/or touchscreens 235a-c and performs appropriate driving commands by interaction with the control module 210. Optionally, the control module 210 can also comprise continues traction/brake lever 220a, an EB button 220b and/or a Driver Vigilance Device e.g. integrated within traction and braking lever 220c.

As an advantageous effect, the remote driving control system 100 provides supervision monitors 235a-c and/or touchscreens 235a-c that allows supervision of the vehicle at arbitrary workplaces 200. That dashboard is independent of the workplace design, its hardware representation and allows also to break-up the 1-to-1 relation into a 1-ton relation for supervision task.

The supervision dashboard(s) includes video streaming for observation of vehicle surrounding (e.g. including pantograph on trains or propellers of ships), the path of travel (e.g. including obstacle detection and highlighting), and the inside of the vehicle (e.g. engine room and driver desk). Moreover, for supervision also diagnostic information can be shown if provided by the vehicle.

While state-of-the-art solution allows to connect only one specific vehicle to only a single remote operator workplace at a time, the new design allows to spread that dashboard to an arbitrary number of users/systems in real time.

The invention allows to configure the supervision dashboard(s) based on vehicle characteristics, remote operator workplace capabilities, and remote operator preferences. For each vehicle type it can be configured once which video signals are available, which control elements are available and mandatorily to be used. Based on this one-time configuration more or less few video streams can be made available. Also based on that configuration the control elements required for operating the vehicle/train can be enabled or disable. This includes also a potential rearrangement of control elements and video streams shown to the remote operator in order to achieve the best usability. Examples may include door control that is required for passenger trains but not for freight train.

The invention decouples the design of the workplace 200 from vehicle's characteristics and driver's preferences. The visualization of control and supervision dashboards can also be configured according to driver's preferences, e.g. the driver wants to operate with or without audio signals from the train. Also, the dashboards can be configured according to the workplace characteristics, i.e. the amount and types of displays for visualization and control of the dashboards.

The visualization can be realized as being browser based dashboards that allows visualisation on any kind of hardware, even tablets and smartphones.

The control dashboards can either be operated through mouse/keyboard/joystick interactions or through touch-displays.

This design allows to capture log data directly from the vehicle and can provide direct access to diagnostic data storage for data analytics with arbitrary purpose. The availability of diagnostic data is not restricted to a specific workplace that is connected to the vehicle.

The remote driving control system 100 provides control dashboard(s) that allows to remotely control the vehicle movement, preconditioned safety of travel is ensured. That dashboard presentation 215 a-n and 235a-c of the remote operator workplace 200 is independent of the workplace design and its hardware representation, and it is as independent as possible from vehicle's characteristics. This decoupling is achieved through abstraction within i) the control dashboard 150 where only generic control elements are available and though ii) the control adaptation module 145 which adapts the generic control commands back to the vehicle/train specifics. The return transmission from the control adaptation module 145 to the vehicle can pass through the same channels as the transmission from the vehicle to the control adaptation module 145.Instead of using a specific control interface that matches to the vehicle's characteristics, e.g. number and style of control elements, the control dashboard of the control module 210 provide a generic control interface applicable for all types of vehicles and trains. A cloud service for vehicle control can adapt the control commands control adaptation module 145 to the vehicle specifics.

One example is the control of brake systems: in freight trains three different brake systems are controlled individually (electrodynamic brake of locomotive, pneumatic brake of locomotive, pneumatic brake of train). In other types of passenger trains and also metros or trams the brake is operated by a single control handle and the brake force split is done by the vehicle control system. The "control adaptation" of our proposed system can introduce the abstraction layer and provide a single brake control handle for all train types, including freight trains. Nevertheless, it is still possible to configure the control dashboard such that the remote operator, if sufficiently skilled, can still operate all brake systems individually by his own and the control adaption is not needed. This will depend on national/company rules and driver qualification and preferences.

Possible functions of the control adaption module 145 might cover the following functionalities:
a) the split of requested brake force or deceleration rates onto different brake systems;
b) the limitation of set values commanded by the remote operator;
c) the limitation of slopes for increasing/decreasing requested traction/brake forces or acceleration/deceleration;
d) specific handling of braking and/or traction commands while starting/stretching of the train or for stopping the train;
e) minimum time delay for traction after brake release;
f) specific handling of braking and/or traction commands while driving over points;
g) other functions.

The functionalities are applied to the cloud service for control according to national/organizational/technical rules and taking into account railway vehicle or train capabilities. These characteristics are provided as configuration to the cloud service for control and decouple the workplace design from vehicle's characteristics.

Additionally, it is also possible to configure the control dashboard(s) according to driver preferences (within regulatory restrictions given by national/organizational/technical rules)

In addition to the control adaptation 145, it is possible to re-use available knowledge on vehicle/train characteristics to identify deviations and to write this information in a database that stores default configuration data and/or real-time configuration data of the specific vehicle. For example, even if the vehicle/train has a specific available traction force the resulting acceleration can be much slower, which can be caused by insufficient information on track gradients, false information on the vehicle's/train's mass (including load) or which can also be caused by errors in the traction system. Hence, that information can be used for incident detection, abnormality detection, and/or predictive maintenance.

Moreover, defined procedure can also be used to adjust the control adaptation 145 and relevant configuration. If as in the previous example, the mass of a freight train or the load of a passenger train is not sufficiently accurate, then based on learning from abnormality detection (deviation between expectation and observation) the train's mass can be corrected for the usage in control adaptation 145 to achieve better controllability.

In case the remote operator switches between supervision and control for different vehicle/train types, awareness of the remote operator for the differences shall be ensured by the cloud service. This can be realized by means of a short introduction for the remote operator to the available dashboard elements, e. g. types of control handles. This can be similar to computer games as interactive quick start guide or tutorial in which players are introduced to the player/gamer interface, when they start the game.

In addition to the information that is available on-board of the train and can be displayed on the dashboard(s) for the remote operator, it is possible to provide further information that can support the driver in execution of his driving task. While on-board train drivers require explicit knowledge and training for specific tracks/routes that might not always be possible or necessary for remote operators. For compensating this lack of knowledge it is possible to show the track characteristics in advance to support driving to the train operator. This can comprise information like the upcoming gradient profile, track curvature, speed profile and information about tunnel, bridges, points, and others. A graphical representation of this information can be used, e.g. on maps or as straight line topology, to improve usability for the remote operator.

Moreover, information can be provided to the train operator that is not available to on-board train driver. This can comprise information like the occurrence of slip/slide in specific track segments as reported by preceding trains on that segment, e.g. through Subset-126 status report. That example will help the remote operator to brake earlier, therefore reducing the required deceleration rate, and avoiding to overshoot the target speed restriction or a stopping point.

All dashboards are configured to be operated by means of keyboard, mouse, and/or touch displays and do not require (vehicle) specific realization of the remote operator workplace.

Additional physical control handles for specific but vehicle agnostic commands are possible but not mandatory, e.g. for driver vigilance device, emergency button, traction/brake lever.

The cloud service shall comply with the required regulations for safety and security.

The remote driving control system can be located in a cloud environment, e.g. a public or private cloud, or any other kind of public/private data centre.

## Claims

1. A method to enable a remote driving control of railway vehicles, ship vehicles, drones, and/or farm vehicles on a generic workplace that allows to remotely operate a wide range of different vehicles, the method comprises the following steps:
• Providing a driving-control-converting-algorithm, wherein the driving-control-converting-algorithm transforms control elements and status elements of a specific vehicle into a vehicle-specific-2D-model or a virtual-reality-model, whereby the driving control-converting-algorithm is being configured to take the properties of the individual vehicle into account and whereby the transformed control elements are only generic control elements which have an effect on the behavior of the vehicle;
• Providing the vehicle-specific-model or the virtual reality-model with data received from an automatic train operation onboard unit (105) or a remote control onboard unit (105) of that vehicle as input data, wherein the vehicle-specific-model or the virtual reality-model is configured to recognize the data and pass it to the appropriate transformed control elements and status elements which results in a real-time-vehicle-specific-model (190);
• Displaying the real-time-vehicle-specific-model on the generic remote operator workplace (200), wherein a remote operator drives the vehicle by interacting with the real-time vehicle-specific-model by operating means of the generic workplace, whereby the generic workplace comprises at least a control dashboard, which is operated through mouse-, keyboard and/or joystick-interactions and/or through a touch display.

2. The method of claim 1, wherein the driving-control-converting-algorithm has access to and uses a database that stores default configuration data and/or real-time configuration data of the specific vehicle.

3. The method of claim 2, wherein the real-time configuration data comprises sensor data of the vehicle, of another vehicle, of track sensors and/or of timetables.

4. The method of any of the claims, wherein at least two real-time-vehicle-specific-models (190) are displayed on a screen or on a virtual glasses of the workplace (200).

5. The method of any of the claims, wherein the real-time-vehicle-specific-model (190) that corresponds to the vehicle the operator is currently driving is displayed in a highlighted mode.

6. The method of claim 5, wherein the highlighted mode shows the current real-time-vehicle-specific-model (190) in bigger size and/or with a higher data rate than the other non-current real-time-vehicle-specific-models (190).

7. The method of claim any of the claims, wherein a pop-up window with vehicle specific information appears when the operator switches between different real-time-vehicle-specific-models (190) and/or that pop-up window with emergency information appears an emergency is detected by the vehicle or by track sensors.

8. The method of claim 1, wherein an illustration of the vehicle is displayed in a virtual environment and/or within captured video data of the vehicle, wherein this illustration also shows steering angle and braking predictions as lines, wherein the predictions are based on the usage of the operating means by the operator and the real-time-vehicle-specific-model.

9. The method of claim 1, wherein the joystick comprises force feedback elements, wherein the force feedback is adjusted according to the vehicle that is currently under operation.

10. The method of claim 1, wherein the remote operator workplace is a virtual glasses, desktop PC, smartphone, and/or a tablet.

11. The method of claim 1, wherein an appearance of the real-time-vehicle-specific-model can be adjusted by the operator, and/or takes the characteristics of the workspace into account.

12. The method of claim 1 and/or claim 2, wherein the driving-control converting algorithm, the database and/or the real-time vehicle specific model (190) are implemented on a cloud server in a cloud environment (300).

13. A remote driving control system (100) to enable a remote driving control of railway vehicles, ship vehicles, drones, and/or farm vehicles on a generic workplace that allows to remotely operate a wide range of different vehicles, comprising
• a server having
o a communication interface to a vehicle, wherein the communication interface is being configured to receive data captured by the vehicle, in particular by an automatic train operation onboard unit (105) and a remote control onboard unit (105), and wherein the communication interface is being configured to send driving commands of an operator to the vehicle;
o a computing unit configured
- to use a driving-control-converting-algorithm that is implemented on the computing unit to transform control elements of a specific vehicle into a vehicle-specific-2D-model or a virtual-reality-model, whereby the driving control-converting-algorithm is being configured to take the properties of the individual vehicle into account;
- to provide the vehicle-specific-model or the virtual-reality-model with data received from the automatic train operation onboard unit or the remote control onboard unit of that vehicle as input data, wherein the vehicle-specific-model or the virtual reality-model is configured to recognize the data and pass it to the appropriate transformed control elements and status elements to generate a real-time-vehicle-specific-model (190), whereby the transformed control elements are only generic control elements which have an effect on the behavior of the vehicle;
• means for displaying the real-time-vehicle-specific-model (190) to the remote operator;
• a control dashboard comprising operating means configured to enable an interaction of the remote operator with the real-time-vehicle-specific-model (190), wherein the real-time-vehicle-specific-model (190) generates driving commands due to this interaction, wherein the operating means of the control dashboard comprises a computer mouse, a touch-screen, a keyboard, and/or a joystick.

## Patentansprüche

1. Verfahren zum Ermöglichen einer entfernten Fahrsteuerung von Schienenfahrzeugen, Schiffsfahrzeugen, Drohnen und/oder landwirtschaftlichen Fahrzeugen an einem generischen Arbeitsplatz, der es ermöglicht, eine große Bandbreite unterschiedlicher Fahrzeuge entfernt zu betreiben, wobei das Verfahren die folgenden Schritte umfasst:
• Bereitstellen eines Fahrsteuerungsumwandlungsalgorithmus, wobei der Fahrsteuerungsumwandlungsalgorithmus Steuerelemente und Statuselemente eines spezifischen Fahrzeugs in ein fahrzeugspezifisches 2D-Modell oder ein Virtual-Reality-Modell transformiert, wobei der Fahrsteuerungsumwandlungsalgorithmus dazu ausgelegt ist, die Eigenschaften des einzelnen Fahrzeugs zu berücksichtigen, und wobei die transformierten Steuerelemente nur generische Steuerelemente sind, die sich auf das Verhalten des Fahrzeugs auswirken;
• Versehen des fahrzeugspezifischen Modells oder des Virtual-Reality-Modells mit Daten, die von einer automatischen Zugbetriebsbordeinheit (105) oder einer Bordeinheit für eine entfernte Steuerung (105) dieses Fahrzeugs als Eingabedaten empfangen werden, wobei das fahrzeugspezifische Modell oder das Virtual-Reality-Modell dazu ausgelegt ist, die Daten zu erkennen und an die geeigneten transformierten Steuerelemente und Statuselemente weiterzuleiten, was zu einem fahrzeugspezifischen Echtzeitmodell (190) führt;
• Anzeigen des fahrzeugspezifischen Echtzeitmodells am generischen Arbeitsplatz für einen entfernten Bediener (200), wobei ein entfernter Bediener das Fahrzeug durch Interagieren mit dem fahrzeugspezifischen Echtzeitmodell durch Bedienmittel des generischen Arbeitsplatzes fährt, wobei der generische Arbeitsplatz mindestens ein Steuerungs-Dashboard umfasst, das über Maus-, Tastatur- und/oder Joystick-Interaktionen und/oder über ein Touch-Display bedient wird.

2. Verfahren nach Anspruch 1, wobei der Fahrsteuerungsumwandlungsalgorithmus Zugriff auf eine Datenbank, die Standardkonfigurationsdaten und/oder Echtzeitkonfigurationsdaten des spezifischen Fahrzeugs speichert, hat und diese verwendet.

3. Verfahren nach Anspruch 2, wobei die Echtzeitkonfigurationsdaten Sensordaten des Fahrzeugs, eines anderen Fahrzeugs, von Spursensoren und/oder von Fahrplänen umfassen.

4. Verfahren nach einem der Ansprüche, wobei mindestens zwei fahrzeugspezifische Echtzeitmodelle (190) auf einem Bildschirm oder auf einer virtuellen Brille des Arbeitsplatzes (200) angezeigt werden.

5. Verfahren nach einem der Ansprüche, wobei das fahrzeugspezifische Echtzeitmodell (190), das dem Fahrzeug entspricht, das der Bediener aktuell fährt, in einem hervorgehobenen Modus angezeigt wird.

6. Verfahren nach Anspruch 5, wobei der hervorgehobene Modus das aktuelle fahrzeugspezifische Echtzeitmodell (190) in größerer Größe und/oder mit einer höheren Datenrate als die anderen nicht aktuellen fahrzeugspezifischen Echtzeitmodelle (190) zeigt.

7. Verfahren nach Anspruch einem der Ansprüche, wobei ein Popup-Fenster mit fahrzeugspezifischen Informationen angezeigt wird, wenn der Bediener zwischen verschiedenen fahrzeugspezifischen Echtzeitmodellen (190) wechselt, und/oder das Popup-Fenster mit Notfallinformationen angezeigt wird, ein Notfall durch das Fahrzeug oder durch Spursensoren detektiert wird.

8. Verfahren nach Anspruch 1, wobei eine Veranschaulichung des Fahrzeugs in einer virtuellen Umgebung und/oder innerhalb erfasster Videodaten des Fahrzeugs angezeigt wird, wobei diese Veranschaulichung auch Lenkwinkel- und Bremsvorhersagen als Linien zeigt, wobei die Vorhersagen auf der Verwendung der Betriebsmittel durch den Bediener und dem fahrzeugspezifischen Echtzeitmodell basieren.

9. Verfahren nach Anspruch 1, wobei der Joystick Kraftrückkopplungselemente umfasst, wobei die Kraftrückkopplung gemäß dem Fahrzeug, das aktuell in Betrieb ist, angepasst wird.

10. Verfahren nach Anspruch 1, wobei der Arbeitsplatz für einen entfernten Bediener eine virtuelle Brille, ein Desktop-PC, ein Smartphone und/oder ein Tablet ist.

11. Verfahren nach Anspruch 1, wobei ein Erscheinungsbild des fahrzeugspezifischen Echtzeitmodells durch den Bediener angepasst werden kann und/oder die Charakteristiken des Arbeitsplatzes berücksichtigt.

12. Verfahren nach Anspruch 1 und/oder Anspruch 2, wobei der Fahrsteuerungsumwandlungsalgorithmus, die Datenbank und/oder das fahrzeugspezifische Echtzeitmodell (190) auf einem Cloud-Server in einer Cloud-Umgebung (300) implementiert sind.

13. System für eine entfernte Fahrsteuerung (100) zum Ermöglichen einer entfernten Fahrsteuerung von Schienenfahrzeugen, Schiffsfahrzeugen, Drohnen und/oder landwirtschaftlichen Fahrzeugen an einem generischen Arbeitsplatz, der es ermöglicht, eine große Bandbreite unterschiedlicher Fahrzeuge entfernt zu betreiben, umfassend
• einen Server, der aufweist
o eine Kommunikationsschnittstelle zu einem Fahrzeug, wobei die Kommunikationsschnittstelle dazu ausgelegt ist, Daten zu empfangen, die durch das Fahrzeug, insbesondere durch eine automatische Zugbetriebsbordeinheit (105) und eine Bordeinheit für eine entfernte Steuerung (105), erfasst werden, und wobei die Kommunikationsschnittstelle dazu ausgelegt ist, Fahrbefehle eines Bedieners an das Fahrzeug zu senden;
o eine Recheneinheit, die ausgelegt ist
- zum Verwenden eines Fahrsteuerungsumwandlungsalgorithmus, der auf der Recheneinheit implementiert ist, um Steuerelemente eines spezifischen Fahrzeugs in ein fahrzeugspezifisches 2D-Modell oder ein Virtual-Reality-Modell zu transformieren, wobei der Fahrsteuerungsumwandlungsalgorithmus dazu ausgelegt ist, die Eigenschaften des einzelnen Fahrzeugs zu berücksichtigen;
- zum Versehen des fahrzeugspezifischen Modells oder des Virtual-Reality-Modells mit Daten, die von der automatischen Zugbetriebsbordeinheit oder der Bordeinheit für eine entfernte Steuerung dieses Fahrzeugs als Eingabedaten empfangen werden, wobei das fahrzeugspezifische Modell oder das Virtual-Reality-Modell dazu ausgelegt ist, die Daten zu erkennen und an die geeigneten transformierten Steuerelemente und Statuselemente weiterzuleiten, um ein fahrzeugspezifisches Echtzeitmodell (190) zu erzeugen, wobei die transformierten Steuerelemente nur generische Steuerelemente sind, die sich auf das Verhalten des Fahrzeugs auswirken;
• Mittel zum Anzeigen des fahrzeugspezifischen Echtzeitmodells (190) für den entfernten Bediener;
• ein Steuerungs-Dashboard, das Bedienmittel umfasst, die dazu ausgelegt sind, eine Interaktion des entfernten Bedieners mit dem fahrzeugspezifischen Echtzeitmodell (190) zu ermöglichen, wobei das fahrzeugspezifische Echtzeitmodell (190) aufgrund dieser Interaktion Fahrbefehle erzeugt, wobei die Bedienmittel des Steuerungs-Dashboards eine Computermaus, einen Touchscreen, eine Tastatur und/oder einen Joystick umfassen.

## Revendications

1. Procédé permettant une commande de conduite à distance de véhicules ferroviaires, de véhicules navals, de drones, et/ou de véhicules agricoles sur un poste de travail générique qui permet de piloter à distance une large gamme de véhicules différents, le procédé comprenant les étapes suivantes :
• fourniture d'un algorithme de conversion de commande de conduite, l'algorithme de conversion de commande de conduite transformant des éléments de commande et des éléments d'état d'un véhicule spécifique en un modèle 2D spécifique au véhicule ou en un modèle de réalité virtuelle, moyennant quoi l'algorithme de conversion de commande de conduite est configuré pour prendre en compte les propriétés du véhicule individuel et moyennant quoi les éléments de commande transformés sont uniquement des éléments de commande génériques qui ont un effet sur le comportement du véhicule ;
• fourniture, au modèle spécifique au véhicule ou au modèle de réalité virtuelle, de données reçues depuis une unité embarquée de pilotage automatique de train (105) ou depuis une unité embarquée de commande à distance (105) de ce véhicule en tant que données d'entrée, le modèle spécifique au véhicule ou le modèle de réalité virtuelle étant configuré pour reconnaître les données et les transmettre aux éléments de commande et éléments d'état transformés appropriés, pour aboutir à un modèle temps réel spécifique au véhicule (190) ;
• affichage du modèle temps réel spécifique au véhicule sur le poste de travail générique d'opérateur à distance (200), un opérateur à distance conduisant le véhicule en interagissant avec le modèle temps réel spécifique au véhicule par des moyens de pilotage du poste de travail générique, moyennant quoi le poste de travail générique comprend au moins un tableau de bord de commande, qui est piloté par le biais d'interactions avec une souris, un clavier et/ou une manette et/ou par le biais d'un affichage tactile.

2. Procédé selon la revendication 1, dans lequel l'algorithme de conversion de commande de conduite a accès à et utilise une base de données qui stocke des données de configuration par défaut et/ou des données de configuration temps réel du véhicule spécifique.

3. Procédé selon la revendication 2, dans lequel les données de configuration temps réel comprennent des données de capteurs du véhicule, d'un autre véhicule, de capteurs de voie et/ou d'horaires.

4. Procédé selon l'une quelconque des revendications, dans lequel au moins deux modèles temps réel spécifiques au véhicule (190) sont affichés sur un écran ou sur des lunettes virtuelles du poste de travail (200).

5. Procédé selon l'une quelconque des revendications, dans lequel le modèle temps réel spécifique au véhicule (190) qui correspond au véhicule que l'opérateur conduit actuellement est affiché dans un mode mis en évidence.

6. Procédé selon la revendication 5, dans lequel le mode mis en évidence montre le modèle temps réel spécifique au véhicule (190) actuel avec une taille plus grande et/ou avec un débit de données plus élevé que ceux des autres modèles temps réel spécifiques au véhicule (190) non actuels.

7. Procédé selon la revendication l'une quelconque des revendications, dans lequel une fenêtre contextuelle avec des informations spécifiques au véhicule apparaît lorsque l'opérateur bascule entre différents modèles temps réel spécifiques au véhicule (190) et/ou cette fenêtre contextuelle avec des informations d'urgence apparaît lorsqu'une urgence est détectée par le véhicule ou par des capteurs de voie.

8. Procédé selon la revendication 1, dans lequel une illustration du véhicule est affichée dans un environnement virtuel et/ou au sein de données vidéo capturées du véhicule, cette illustration montrant également des prédictions d'angle de manœuvre et de freinage sous forme de lignes, les prédictions étant basées sur l'utilisation des moyens de pilotage par l'opérateur et sur le modèle temps réel spécifique au véhicule.

9. Procédé selon la revendication 1, dans lequel la manette comprend des éléments de retour d'effort, le retour d'effort étant ajusté en fonction du véhicule qui est actuellement piloté.

10. Procédé selon la revendication 1, dans lequel le poste de travail d'opérateur à distance prend la forme de lunettes virtuelles, d'un ordinateur de bureau, d'un smartphone, et/ou d'une tablette.

11. Procédé selon la revendication 1, dans lequel une apparence du modèle temps réel spécifique au véhicule peut être ajustée par l'opérateur, et/ou prend en compte les caractéristiques de l'espace de travail.

12. Procédé selon la revendication 1 et/ou la revendication 2, dans lequel l'algorithme de conversion de commande de conduite, la base de données et/ou le modèle temps réel spécifique au véhicule (190) sont mis en œuvre sur un serveur cloud dans un environnement cloud (300) .

13. Système de commande de conduite à distance (100) permettant une commande de conduite à distance de véhicules ferroviaires, de véhicules navals, de drones, et/ou de véhicules agricoles sur un poste de travail générique qui permet de piloter à distance une large gamme de véhicules différents, comprenant
• un serveur possédant
∘ une interface de communication avec un véhicule, l'interface de communication étant configurée pour recevoir des données capturées par le véhicule, notamment par une unité embarquée de pilotage automatique de train (105) et une unité embarquée de commande à distance (105), et l'interface de communication étant configurée pour envoyer au véhicule des commandes de conduite d'un opérateur ;
∘ une unité de calcul configurée pour
- utiliser un algorithme de conversion de commande de conduite mis en œuvre sur l'unité de calcul afin de transformer des éléments de commande d'un véhicule spécifique en un modèle 2D spécifique au véhicule ou en un modèle de réalité virtuelle, moyennant quoi l'algorithme de conversion de commande de conduite est configuré pour prendre en compte les propriétés du véhicule individuel ;
- fournir, au modèle spécifique au véhicule ou au modèle de réalité virtuelle, des données reçues depuis l'unité embarquée de pilotage automatique de train ou depuis l'unité embarquée de commande à distance de ce véhicule en tant que données d'entrée, le modèle spécifique au véhicule ou le modèle de réalité virtuelle étant configuré pour reconnaitre les données et les transmettre aux éléments de commande et éléments d'état transformés appropriés afin de générer un modèle temps réel spécifique au véhicule (190), moyennant quoi les éléments de commande transformés sont uniquement des éléments de commande génériques qui ont un effet sur le comportement du véhicule ;
• des moyens d'affichage du modèle temps réel spécifique au véhicule (190) à l'opérateur à distance ;
• un tableau de bord de commande comprenant des moyens de pilotage configurés pour permettre une interaction de l'opérateur à distance avec le modèle temps réel spécifique au véhicule (190), le modèle temps réel spécifique au véhicule (190) générant des commandes de conduite du fait de cette interaction, les moyens de pilotage du tableau de bord de commande comprenant une souris d'ordinateur, un écran tactile, un clavier, et/ou une manette.
